Europäisches Patentamt

European Patent Office

Office européen des brevets

(19)

(11) Veröffentlichungsnummer: **0 147 557**
**A1**

(12) **EUROPÄISCHE PATENTANMELDUNG**

(21) Anmeldenummer: **84112682.4**

(22) Anmeldetag: **20.10.84**

(51) Int. Cl.⁴: **F 16 L 55/10**
**B 08 B 9/02, E 03 C 1/30**

(30) Priorität: 06.12.83 DE 3344037
08.10.84 DE 3436857

(43) Veröffentlichungstag der Anmeldung:
10.07.85 Patentblatt 85/28

(84) Benannte Vertragsstaaten:
AT BE CH FR GB IT LI LU NL SE

(71) Anmelder: Baldus, Helmut
Ruhrstrasse 5
D-543 Montabaur(DE)

(72) Erfinder: Baldus, Helmut
Ruhrstrasse 5
D-543 Montabaur(DE)

(54) **Mechanischer Rohrreiniger und Rohrverschluss.**

(57) Die Erfindung betrifft einen Verbindungsflansch zum Beseitigen von Rohrverstopfungen und zum Verschließen von Rohrüberläufen oder sonstigen Öffnungen. Die Hauptmerkmale bestehen darin, daß sich dieser Rohrverbindungsflansch (1) an jeden handelsüblichen Einlaufsiphon bei Wannen, Becken usw. anschließen läßt, wobei der Rohrquerschnitt durchaus verschiedene Größen aufweisen kann. Er ist auch als Überlaufverschluß anwendbar. Die Spreizfeder (3), die die Verankerung darstellt, läßt sich in den verschiedensten Rohröffnungsgrößen befestigen. Mit der Distanzschraube (Befestigungsschraube) (4) wird der Flansch luft- oder wasserdicht an den versch. Öffnungen (12) befestigt. Der Dichtring (2) stellt die Abdichtung dar. Das Schraubgewinde (7) am oberen Teil (1) ermöglicht das Befestigen einer Schraubkappe oder einer handelüblichen Schlauchverschraubung mit Schlauch wodurch Luft oder Wasser für den Spülvorgang eingepreßt werden kann. Die Handhabung ist einfach, sicher und setzt keine handwerklichen Kenntnisse voraus.

FIG 1

EP 0 147 557 A1

0147557

## Verbindungsflansch zum beseitigen von Rohrver-

## verstopfungen und zum abdichten von Überläufen

## oder sonstigen Rohrartigen Öffnungen.

Die Erfindung bezieht sich auf einen Rohrverbindungsflansch, der zum reinigen und abdichten von Rohrsystemen verwendet werden kann.

Das Flanschformteil wird mit einer Spreizfeder und einer Distanzschraube an den Wandungen des Einlauf siphon, bzw. an der Überlauföffnung befestigt.

Durch den Dichtring ist gewährleistet, daß die Verbindung zwischen Flansch und Abflußeinlauf oder Überlauf luft- und flüssigkeitsdicht abschließt.

Der Verbindungsflansch ermöglicht, daß bei Waschbecken, Duschwannen, Bidets, Spülen, Urinalbecken oder auch bei sonstigen Abläufen eine Rohrverstopfung durch Wasser- oder Luftdruck freigespült werden kann.
Gleichzeitig kann der Flansch als Verschluß an Überlauföffnungen bei Becken, Wannen usw. angewandt werden. Lediglich an dem vorgesehenen Gewinde muß eine Schraubkappe angebracht werden, um den evtl. Rückstau zu verhindern.

Es ist ein Verbindungsflansch gemäß dem Oberbegriff Rohrreiniger, bzw. Rohrverschluß.
Er weist jedoch wesentliche Vorteile gegenüber den bisher erteilten Patenten auf.

0147557

DE-PS 255237

Bei diesem Pat ent läßt die Verbindungsstange in der Horizontalen keine Bewegung zu. Der Spülaufsatz läßt sich nur bei einem bestimmten Einlaufblech verwenden, wo die entsprechende Verankerungsmöglichkeit einen Halt findet.

Diese Form der Verankerung findet keine Anwendung wo der Einlauf vollkommen offen ist, wie z.B. bei einem Excentherverschluß, wie heute üblich.

Das Gleiche gilt für den heute üblichen Einlauf bei Spülen, weil die Verankerungsstange mittig angeordnet ist. Hier ist die Befestigungsschraube für das Einlaufblech. Die Verankerung ist nicht möglich.

Außerdem stellt der obere Teil eine aufwendige Ankupplungsmöglichkeit für den Druckschlauch dar.

DE - GM 7516934.5

Hier handelt es sich nur um einen Rohrverschluß, der nicht gleichzeitig als Flanschanschluß für die Spülmöglichkeit bei Rohrverstopfungen genutzt werden kann.

Ein Schlauchanschluß für eine Druckspülung ist hier nicht vorgesehen.

US - 4.059.250

Bei diesem Patent soll die Verstopfung mittels Gasdruck beseitigt werden. Diese Art stellt für den Nichtfachmann eine gefährliche Handhabung dar. Außerdem ist die Anflanschungsmöglichkeit verhältnismäßig kompliziert und läßt sich nicht bei den verschiedenen Rohrquerschnitten verwenden, es sei denn, man hat für die verschiedensten Rohrquerschnitte entsprechend verschieden große Formteile. Außerdem kann es nicht als Überlaufverschluß verwandt werden.

US - 4187563

Bei diesem Patent ist die Verankerung auch nur für einen bestimmten Rohrquerschnitt mit einer bestimmten Öffnung am Einlaufsieb möglich. Die Abdichtung zwischen den Verankerungsschrauben ist auch in dieser Art nicht vorteilhaft, weil die Verankerungsschrauben bei jeder Rohrspülung nue durch den Dichtring bewegt werden. Hier besteht die Gefahr, daß nach öfterem Benutzen zwischen Verankerungsstange un d dem Dichtring eine Undichtigkeit entstehen wird, die den Verbraucher dazu zwingt, immer wieder einen neuen Dichtring zu verwenden.

Eine Verwendung als Überlaufvershhluß ist auch in dieser Form nicht möglich. Auch die Art des Druckschlauchanschlußes ist nicht handelsüblich. Die Handhabung für das anbringen des Flansches ist relativ aufwendig.

US - 3952767

Bei dieser patentierten Rohrreinigungsmöglichkeit handelt es sich um eine chemische Rohrreinigung. Der Verbindungsflansch ( Rohrverschluß) läßt sich nur für einen Rohrabgang verwenden, der ein Innengewinde aufweist. Es besteht keine Möglichkeit diesen Verschluß an einem handelsüblichen Siphoneinlauf zu befestigen.

488066 ( Großbritannien, Australien )

Die Anflanschung ist hier mit zwei stck. speziellen Haken vorgesehen. Offensichtlich läßt sich die Verankerung nur für einen bestimmten Rohrquerschnitt mit entsprechender Verankerungsmöglichkeit nutzen, d.h. das Einlaufsieb im Siphon wird hier für die Verankerung verwendet. Eine Verankerung für einen Einlauf, z.B. bei den heutigen Einläufen mit Excenther, wo kein Einlaufsieb vorhanden ist, läßt sich der Rohrreiniger, wie er in dieser Form gestaltet ist, nicht verankern und nicht anwenden.

Er besteht außerdem aus zwei Teilen, der Verankerung und dem eigentlichen Rohrverschluß mit dem Schlauchverschluß. Nachteilig ist hier, daß der Rohrverschluß am oberen Teil eine zusätzliche Dichtungsmöglichkeit benötigt um ein austreten des Spülwassers zu verhindern. Er läßt sich offensichtlich auch nicht als Überlaufverschluß anwenden. Die Handhabung ist relativ aufwendig.

Hier will der Erfinder Abhilfe schaffen.
Die Erfindung, wie sie in den Ansprüchen gekennzeichnet ist, löst die Aufgabe, die Rohrverstopfung mittels Wasser- oder Luftdruck mit einem Formteil (glockenförmig), welches eine Spreizfeder und eine handelsübliche Schraube mit Flügelmutter besitzt, freizuspülen, ohne den Einlaufsiphon und das Rohrsystem zu beschädigen.

Die durch die Erfindung erreichten Vorteile sind im wesentlichen darin zu sehen, daß der Flanschformteil für die verschiedensten Querschnitte der Abläufe, sowie der Überläufe an Becken, Wannen usw. zu verwenden ist.

Die Spreizfeder erfüllt den gleichen Zweck, daß sie auch in den verschiedensten Öffnungsgrößen eine Verankerung erzielt, sei es am Einlaufsieb - Spülen oder sonstigen Ablaufmöglichkeiten, sei es in der Überlauföffnung bei Becken, Bidets oder Sonst., sei es unterhalb der Schraubrosette wie bei Badewannen und Duschwannen, oder auch bei Urinalbecken. Außerdem ist kein zusätzliches Abdichten am oberen Teil notwendig, weil die Befestigungsschraube mit ihrem Gewinde in die Schlauchverschraubung eintritt.

-5-

Das Gewinde mit Dichtring in der Schlauchverschraubung am oberen Teil stellt die Abdichtung dar und gleichzeitig die Anschlußmöglichkeit für die entsprechende Schlauchverschraubung.

Insgesamt zeichnet sich diese Rohrreinigungsmöglichkeit durch die einfache und sichere Handhabung, die hohe Lebensdauer und die vielseitige Verwendbarkeit ( verschiedene Rohrquerschnitte) aus.

Im Nachfolgenden wird die Erfindung anhand von einer darstellenden Zeichnung näher erläutert.

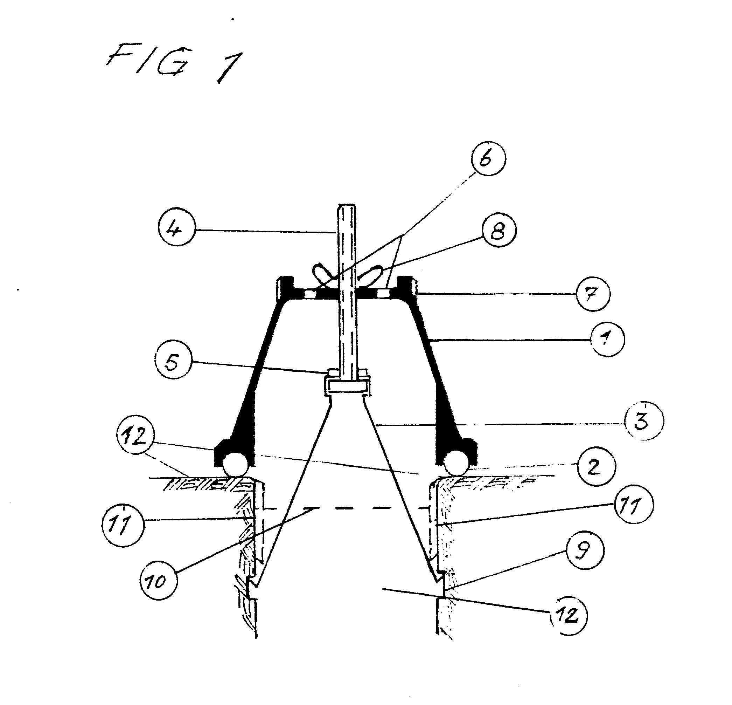

Die Zeichnung zeigt die Figur im Schnitt.

In der Figur ist der Rohrreiniger mit der Anflanschmöglichkeit dargestellt.

Der Flansch besteht aus dem Flanschformteil (1), dem Dichtring (2), der Spreizfeder (3), der Distanzschraube (4), aus der Kontermutter (5), aus den Durchtrittsöffnungen für Wasser oder Luft (6), aus dem Gewindeanschluß (7) und aus der Flügelmutter (8).

Die Verankerungsmöglichkeit stellt einmal das Einlaufblech (10) oder die Überlaufschlitze (9) bzw. die Schraubrosette (11) dar.

Bei der Verwendung als Überlaufverschluß verankert sich die Feder an der Beckenrückwand. Dieses wurde hier nicht besonders dargestellt.

## BEZUGSZEICHENLISTE

### Figur 1

1) Flanschformteil

2) Dichtring

3) Spreizfeder

4) Distanzschraube

5) Sicherungsschraube

6) Durchtrittsöffnung für Luft oder Wasser

7) Gewinde für das anbringen einer Schlauchverschraubung, bzw. Verschlußkappe

8) Flügelmutter

9) Überlauföffnung

10) Einlaufblech, dient als Verankerung

11) Rosettenverschlußschraube

12) Abflußeinlaufwandung / Abflußrohr- bzw.
Überlauföffnung

PATENTANSPRÜCHE                          0147557

1) Rohrverbindungsflansch zum reinigen und abdichten von Rohrsystemen, gekennzeichnet durch den Flanschformteil (1), einem Dichtring (2), einer Spreizfeder (3), einer Distanzschraube (4), einer Kontermutter (5), Durchtrittsöffnungen für Wasser oder Luft (6), einem Gewinde (7) und einer Flügelmutter (8).

2) Rohrverbindungsflansch nach Anspruch 1 dadurch gekennzeichnet, daß die Spreizfeder (3) eine Verankerung in den Überlauföffnungen (9) unterhalb des Einlaufbleches (10) und unterhalb der Schraubrosette (11) in den verschiedensten Rohrquerschnitten und Überläufen ermöglicht. ( Nicht dargestellt).

3) Rohrverbindungsflansch nach Anspruch 1 ist dadurch gekennzeichnet, daß die Distanzschraube (4) mit der Flügelmutter (8) ein Befestigen und Lösen ermöglicht.

4) Rohrverbindungsflansch nach Anspruch 1 dadurch gekennzeichnet, daß die Distanzschraube (4) sich innerhalb der Schlauchverschraubung befindet und ein zusätzliches Abdichten nicht notwendig werden läßt. Die Abdichtung erfolgt über das Gewinde (7) mit einer handelsüblichen Schlauchverschraubung.

5) Rohrverbindungsflansch nach Anspruch 1 dadurch gekennzeichnet, daß die Durchtrittsöffnungen (6) für Wasser oder Luft sich innerhalb der Schlauchverschraubung befinden. Es sind keine zusätzlichen Abdichtungen notwendig.

6) Rohrverbindungsflansch ist nach Anspruch 1 dadurch gekennzeichnet, daß der Dichtring (2) durch anziehen und lösen der Befestigungsschraube (4) eine Luft- und Flüssigkeitsdichtigkeit zwischen Einlauf oder Überlauf (12) und dem Flanschformteil (1) herstellt.

7) Rohrverbindungsflansch nach Anspruch 1 ist dadurch gekennzeichnet, daß er auch als Überlaufverschluß genützt werden kann, in dem man an dem Gewinde (7) eine Schraubkappe anbringt.

8) Rohrverbindungsflansch nach Anspruch 1 dadurch gekennzeichnet, daß die Feder (3) an der Distanzschraube (4) derartig geformt ist, daß sie bei der Montage und Demontage nicht verloren gehen kann.

FIG 1

## Europäisches Patentamt
## EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-C- 134 088 (EMIL DE CARLO) <br> * Figuren 1,2 * | 1-8 | F 16 L 55/10 <br> B 08 B 9/02 <br> E 03 C 1/30 |
| | --- | | |
| Y | DE-C- 122 879 (EMIL DE CARLO) <br><br> * Figuren 1-5 * | 1-3,6, 8 | |
| A | | 4,5,7 | |
| | --- | | |
| Y | GB-A- 488 066 (C. HORWITZ) <br><br> * Figuren 1-4 * | 1-3,6, 8 | |
| A | | 4,5,7 | |
| | --- | | RECHERCHIERTE SACHGEBIETE (Int Cl 4) |
| A | DE-C- 128 297 (EMIL DE CARLO) <br> * Figuren 1,2 * | 1-8 | |
| | --- | | |
| A | DE-C- 148 398 (EMIL DE CARLO) <br> * Figuren 1-3 * | 1-8 | F 16 L 55/00 <br> F 16 L 23/00 <br> B 08 B 9/00 <br> E 03 C 1/00 |
| | --- | | |
| A | US-A-2 974 685 (B. VERNOOY) <br> * Figuren 1,2 * | 1 | |
| | --- | | |
| A | BE-A- 706 396 (F. SCHABOS) <br> * Figuren * | 1 | |
| | --- | -/- | |

Der vorliegende Recherchenbericht wurde für alle Patentansprüche erstellt.

| Recherchenort | Abschlußdatum der Recherche | Prüfer |
|---|---|---|
| DEN HAAG | 21-02-1985 | ANGIUS P. |

## Europäisches Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-2 274 453 (A.J. MATTER) <br> * Figuren 1-5 * | 1 | |
| A | US-A-1 395 125 (W.E.D. LEWIS et al.) <br> * Figuren 1-3 * | 1 | |

RECHERCHIERTE SACHGEBIETE (Int. Cl.4)

Der vorliegende Recherchenbericht wurde für alle Patentansprüche erstellt.

| Recherchenort <br> DEN HAAG | Abschlußdatum der Recherche <br> 21-02-1985 | Prüfer <br> ANGIUS P. |
|---|---|---|